# EUROPÄISCHE PATENTSCHRIFT

(11) **EP 2 130 365 B1**
(45) Veröffentlichungstag und Bekanntmachung des Hinweises auf die Patenterteilung: **27.10.2010**
(21) Anmeldenummer: 08734722.5
(22) Anmeldetag: 20.03.2008
(51) Int. Cl.: H04N 1/60, G01J 3/46

(54) **ÜBERWACHUNG DES FARBEINDRUCKS VON MEHRFARBIG GEMUSTERTEN FLÄCHEN**
MONITORING THE COLOR IMPRESSION OF MULTICOLOR PATTERNED AREAS
SURVEILLANCE DE L'EFFET CHROMATIQUE DE SURFACES À MOTIFS POLYCHROMES

(30) Priorität: 24.03.2007 DE 102007014735
(43) Veröffentlichungstag der Anmeldung: 09.12.2009
(73) Patentinhaber: Baumer Inspection GmbH, 78467 Konstanz (DE)
(72) Erfinder: MASSEN, Robert, 78337 Öhningen (DE)
(74) Vertreter: Prinz & Partner
(86) Internationale Anmeldenummer: PCT/EP2008/002296
(87) Internationale Veröffentlichungsnummer: WO 2008/116611

## Beschreibung

Die automatische Überwachung des Gesamt-Farbeindrucks von mehrfarbigen Flächen stellt auch heute noch ein großes Problem beim Bedrucken von Dekorpapieren und Dekorfolien für die Fußboden- und Laminatindustrie, bei der Produktion mehrfarbig gemusterter Kunststoff- oder Gummi-Bodenbeläge sowie allgemein beim Herstellen von Produkten mit einer mehrfarbig gemusterten Oberfläche dar. Auch die Beurteilung von mehrfarbigen natürlichen Oberflächen wie Natursteine, Marmore, Holzflächen usw. und ähnlichen Farbtexturen ist heute nicht möglich, da die traditionelle Kolorimetrie nur für einfarbige Flächen spezifiziert und normiert ist.

Selbst die sogenannte bildgebende Spektroskopie, welche mit einer hohen örtlichen Auflösung ein Spektrum für jeden von der eingesetzten Kamera erfassten Bildpunkt ausmisst, ist nicht in der Lage, Messwerte zu generieren, welche dem Farbeindruck des menschlichen Sehsystems bei der Betrachtung farblich gemusterter Oberflächen, insbesondere solche mit feinen Mustern, genau genug entsprechen.

Die Herstellung und die automatische Überwachung der ästhetischen Qualität der Oberfläche solcher Produkte erfordert daher heute immer noch visuelle Vergleiche durch ausgebildete und erfahrene Spezialisten und ist daher kostspielig, ungenau und erzeugt nur subjektive und qualitative Qualitätsdaten.

Diese Einschränkungen der derzeit bekannten Messtechnik beruhen darauf, dass diese Techniken wichtige Besonderheiten des menschlichen Seh- und Erkennungssystem bei der Betrachtung von mehrfarbig gemusterten Flächen nicht oder nicht genügend berücksichtigen.

Es ist aus der deutschen Patentanmeldung DE-A 103 28 322 ein Verfahren und eine Anordnung bekannt, welches den eigentümlichen physiologischen Effekt berücksichtigt, dass kleine vom menschlichen Auge als solche nicht erkennbare Änderungen in der physikalischen Bildschärfe zu einem Eindruck führen, als ob sich der Farbton verschoben hat. Der Mensch sieht z.B. beim Druck von mehrfarbigem Dekorpapier eine Farbtonverschiebung im Vergleich zur Referenz (einen sogenannten Farbstich), obwohl die physikalische Farbzusammensetzung sich nicht geändert hat und damit sowohl die klassische Kolorimetrie oder die neuere bildgebende Kolorimetrie keine Farbverschiebung messen. Diese kleinen Änderungen der Bildschärfe bewirken auch beim erfahrenen Druckspezialisten den Eindruck einer Farbverschiebung, da auch sein Auge diese Änderung der Bildschärfe als solche nicht erkennt. Die Drucker greifen demnach in die Rezeptur und Dosierung der Farbpigmente korrigierend ein, obschon die physikalische Ursache gar nicht hier liegt sondern nach kleinen Registrierungsfehlern zwischen den einzelnen Druckstufen gesucht werden muss. Die genannte DE-A-103 28 322 zeigt eine Lehre zur Behebung dieser Irreführung, indem sie gleichzeitig mit bildgebenden und farbtüchtigen Sensoren wie z.B. Farbkameras die Stabilität der Farbstatistiken und die der Bildschärfe misst und im Vergleich zur Referenz darstellt.

Damit hat der Drucker ein Werkzeug zur Verfügung, welches ihm erlaubt, die visuell erkennbaren Farbverschiebungen richtig einzuordnen und an der richtigen Stelle den Druckprozess zu korrigieren:
a) durch Veränderung der Pigmente und deren Dosierung, wenn eine Veränderung der Farbstatistiken gemessen wird
b) durch Veränderung derjenigen Einstellungen des Drucksystems, welche die physikalische Bildschärfe beeinflussen, wenn eine Änderung der Bildschärfe gemessen wird.

Die angezeigten Abweichungsmaße für die physikalisch gemessene Farbe und die physikalisch gemessene Bildschärfe sind lediglich relative Maße und werden durch keine Norm erfasst.

Trotz dieser wesentlichen Verbesserung löst die DE-A-103 28 322 aber nicht ein weiteres, physiologisch ebenso bedeutendes Problem der menschlichen Farbwahrnehmung, nämlich die unterschiedliche Wahrnehmung von farblich gemusterten Flächen zwischen genetisch und kulturell unterschiedlichen Beobachtern.

Es ist aus der Literatur zu den genetischen Grundlagen des menschlichen Farbsehens bekannt, dass weibliche Beobachter insbesondere im Bereich der rötlichen Töne wesentlich differenziertere Farbtonabstufungen erkennen können als männliche Beobachter (siehe z.B. Prof. Brian Verrelli , Arizona State University , in: Scientific American, Sept. 2004 ).

In "Culture and Cognition: what is universal about the representation of color experiences?" fasst der Autor Kimberley A. Jameson, Dept. of Psychology, University of California, San Diego, (kjameson@aris.ss.uci.edu) den heutigen Diskussionsstand zur kulturspezifischen und rassespezifischen Farbwahrnehmung des Menschen zusammen. Eine z.B. von Mediengestaltern seit langem bekannte Spezifität der asiatischen Bevölkerung ist die andersartige Bewertung der Rot-Töne. Die Werbung berücksichtigt dies bei ihrer Arbeit in einer empirischen Weise, auch wenn die speziellen Beiträge der Genetik und der Kultur zur Wahrnehmung nach dem heutigen Stand der Wissenschaft nicht klar getrennt werden können.

Aus jüngsten Untersuchungen über die Verschiebung des Farbtones als Funktion der Ortsfrequenzbandbreite ist bekannt, dass der Farbton einer unifarbenen Fläche sich mit ansteigender Bandbreite verschiebt. Die Erhöhung der Bandbreite wird im Versuch dadurch erreicht, dass eine unifarbene Fläche durch schwarze, immer dichter werdende Balken abgedeckt wird (siehe Oliver Tulet: Preliminary Studies on the Influence of Spectral Bandwidth on Colour Appearance, pp.307-310, 3rd European Conference on Color in Graphics, Imaging and Vision, june 19-22, 2006,University of Leeds, UK). Diese Untersuchungen haben gezeigt, dass weibliche Beobachter eine bandbreitenabhängige Verschiebung des Farbtons einer unifarbenen Fläche bis zu 5 mal empfindlicher wahrnehmen als männliche Beobachter. Damit unterstützt diese Arbeit, auch wenn sie nur einfarbige Muster berücksichtigt, zumindest indirekt die Verfahren der älteren DE-A-103 28 322.

Die eigenen Untersuchungen des Erfinders haben ergeben, dass die wahrgenommene Farbverschiebung infolge einer sich ändernden Bildschärfe auch bei mehrfarbig gemusterten Bildern, wie sie beispielsweise bei dekorierten Fußbodenbelägen vorliegen, von Frauen wesentlich stärker als von Männern wahrgenommen wird.

Die Fachkräfte in der heute global operierenden Druckindustrie, insbesondere die Fachkräfte des speziellen anspruchsvollen Dekordrucks, welche für die Einstellung des Farbdrucks verantwortlich sind, sind allerdings meistens Männer einer bestimmten Kultur. Entsprechend bewerten diese Männer sowohl Unterschiede bei einfarbigen Flächen als auch die von den nach der DE-A-103 28 322 realisierten Überwachungsgeräte angezeigten Unterschiede bzgl. der Farbstatistiken und der Bildschärfe zu tolerant gegenüber der Wahrnehmung durch Frauen.

Diese zu tolerante Produktion kann daher zu sehr kostspieligen Reklamationen führen, insbesondere wenn es sich um dekorierte Flächen handelt, welche z.B. im Haushalt vorwiegend von Frauen beurteilt werden wie Küchenmöbel, Arbeitsplatten, Fußböden usw.

Die genannten Fachkräfte bewerten diese Toleranzen auch anders als Drucker eines anderen Kulturkreises oder einer anderen Rasse, da nach dem heutigen Stand der Wissenschaft Farbe rasse- und kulturspezifisch wahrgenommen wird.

Wir können daher feststellen, dass die menschliche Wahrnehmung mehrfarbig gemusterter Oberflächen in starkem Maße durch die Genetik (Geschlecht und Rasse) und durch die Kultur bestimmt wird und dass die klassische Kolorimetrie einschließlich der bildgebenden Kolorimetrie und bildgebenden Spektrometrie hierfür keine Meßvorschriften, Normen etc. anbietet.

Es besteht daher ein großes technisches und wirtschaftliches Interesse daran, ein System insbesondere zur automatischen Überwachung des Farbeindrucks von farblich gemusterten Oberflächen zu schaffen, welche den gegenüber einer Referenz gemessenen Farbeindruck so anzeigt, dass das Abweichungsmaß die genetisch und/oder kulturell bedingten unterschiedlichen Wahrnehmungen des anvisierten Kundenkreises berücksichtigt und nicht von der spezifischen Wahrnehmung des Druckers festgelegt ist.

Dies wird erfindungsgemäß durch ein Verfahren mit den Merkmalen gemäß Anspruch 1 oder Anspruch 2 und durch eine Anordnung mit den Merkmalen gemäß Anspruch 6 oder 7 erreicht. Die zu überwachende mehrfarbig gemusterte Oberfläche wird mit mindestens einem bildgebenden Sensor in wenigstens zwei spektral unterschiedlichen Bereichen erfasst und Abweichungsmaße bezüglich mindestens einer Referenz der Spektralstatistik und der Bildschärfe des oder der n-kanaligen Bilder ermittelt. Die Abweichungsmaße werden einzeln oder in Kombinationen mittels mindestens einer die genetisch/kulturell spezifische Wahrnehmung für mehrfarbig gemusterte Oberflächen des anvisierten Kundenkreises beschreibenden Transformation umgerechnet und der oder die transformierten Abweichungswerte mit mindestens einer Schwelle verglichen. Damit wird eine Aussage geliefert, ob die Oberfläche eine für den anvisierten Kundenkreises ausreichende Qualität besitzt. Anstelle einer Transformation der Abweichungsmaße kann auch eine Transformation der Schwellwerte erfolgen.

Die erfindungsgemäße wahrnehmungsgerechte Beurteilung der produzierten Qualität einer mehrfarbig gemusterten Oberfläche in Bezug auf genetische und kulturelle Spezifität ermöglicht es nicht nur, die gewünschte Qualität für einen genetisch/kulturell spezifischen Kundenkreis zu produzieren. Sie ermöglicht es auch, Ausschuss zu verringern und damit die Produktivität zu steigern. Ist beispielsweise ein Dekor produziert worden, welches für eine europäische, weibliche Wahrnehmung nicht toleriert werden kann, so kann diese Produktion für einen männlichen Kundenkreis oder in einer weniger auf ROT-Verschiebung reagierenden Kultur durchaus qualitativ ausreichend sein.

Da viele Drucker von Dekorpapieren und Dekorfolien lokal produzieren aber global vermarkten, ermöglicht es das erfindungsgemäße Verfahren, für einen genetisch/kulturell bekannten Käuferkreis eine ausreichende Qualität zu produzieren, anstatt das höchste Qualitätsniveau für einen Kundenkreis zu liefern, welcher diese Qualität wahrnehmungsbedingt nicht sehen kann.

Zusammengefasst erlaubt es daher der Erfindungsgedanke, eine Messtechnik für die Stabilität des Farbeindrucks von produzierten mehrfarbig gemusterten Oberflächen anzubieten, welche Messwerte erzeugt, die dem genetisch/kulturell bedingten Farbempfinden des Kundenkreises für mehrfarbig gemusterte Oberflächen entsprechen und daher eine entsprechende angepasste Qualitätsbeurteilung erlauben.

Diese Messtechnik für mehrfarbig gemusterte Oberflächen ist von besonderer Bedeutung, wenn sie in der Produktionslinie arbeitet. Der Erfindungsgedanken umfasst aber auch den Einsatz des Verfahrens in Labor- oder Handmessgeräten, solange die Anwendung die Bewertung mehrfarbig gemusterter Oberflächen mit einem bildgebenden n-kanaligen Farb/Spektralsensor und einer genetisch und/oder kulturell wahrnehmungsrelevanten Transformation der bestimmten Abweichungsmaße zu einer Referenz umfasst.

Für n=3 sprechen wir im Rahmen dieser Anmeldung von einem Farbbildsensor (einer Farbkamera mit den spektralen Kanälen ROT,GRÜN,BLAU), für n>3 von einer bildgebenden Spektrometrie bzw. einer n-kanaligen Spektralkamera. Daneben umfasst der Erfindungsgedanke auch bildgebende Sensoren, bei welchen die Farb- bzw. spektrale Information dadurch gewonnen wird, dass die erforderlichen Bilder mit einem einkanaligen Sensor und mehreren geschalteten, spektral unterschiedlichen Beleuchtungsquellen aufgenommen werden. Diese Verfahren sind dem Fachmann der Bildverarbeitung bekannt.

Der Erfindungsgedanke wird beispielhaft anhand eines Systems zur wahrnehmungsgerechten Messung des Farbeindrucks von mehrfarbig gemusterten Laminat-Fußböden erklärt. Diese Laminate zeigen beispielsweise ein gedrucktes Holzdekor mit einem hochfrequenten Muster der Holzmaserung. Hochfrequent bedeutet in diesem Zusammenhang eine hohe Anzahl von Hell-Dunkel-Übergängen bezogen auf eine Längeneinheit. Beispielhaft wird zur einfacheren Erklärung des Erfindungsgedanken die genetische Spezifität auf den Unterschied des Geschlechtes des Beobachters beschränkt und die rasse- und kulturspezifischen Wahrnehmungsunterschiede im Rahmen dieser beispielhaften Erklärung ausgeklammert.

Weiterhin wird die Erklärung auf die geschlechtsspezifisch unterschiedliche Wahrnehmung des Farbeindrucks einer mehrfarbig gemusterten Oberfläche unter dem Einfluss der Bildschärfe beschränkt. Die Wahrnehmung von einfarbigen, d.h. nicht gemusterten Flächen, bei denen zwangsläufig auch keine "Bildschärfe" existiert, ist nicht Gegenstand des Erfindungsgedanken.

Die Beschreibung erfolgt anhand der beigefügten Zeichnung, hierin zeigen
- Figur 1 schematisch eine erfindungsgemäße Anordnung zum Ausführen des erfindungsgemäßen Verfahrens;
- Figur 2 einen typischen Verlauf der Wahrnehmung des Farbeindrucks "Rötlichkeit" eines Holzdekors als Funktion der Bildschärfe bei einem männlichen und bei einem weiblichen Beobachter;
- Figur 3 einen typischen Verlauf einer Bildschärfedifferenz eines gedruckten Holzdekors im Vergleich zu einer Referenz aufgetragen über die Produktionszeit;
- Figur 4 eine Anzeige der Bildschärfedifferenz nach einer erfindungsgemäßen Transformation für den Fall einer für einen vorwiegend weiblichen Kundenkreis gedachten Produktion.

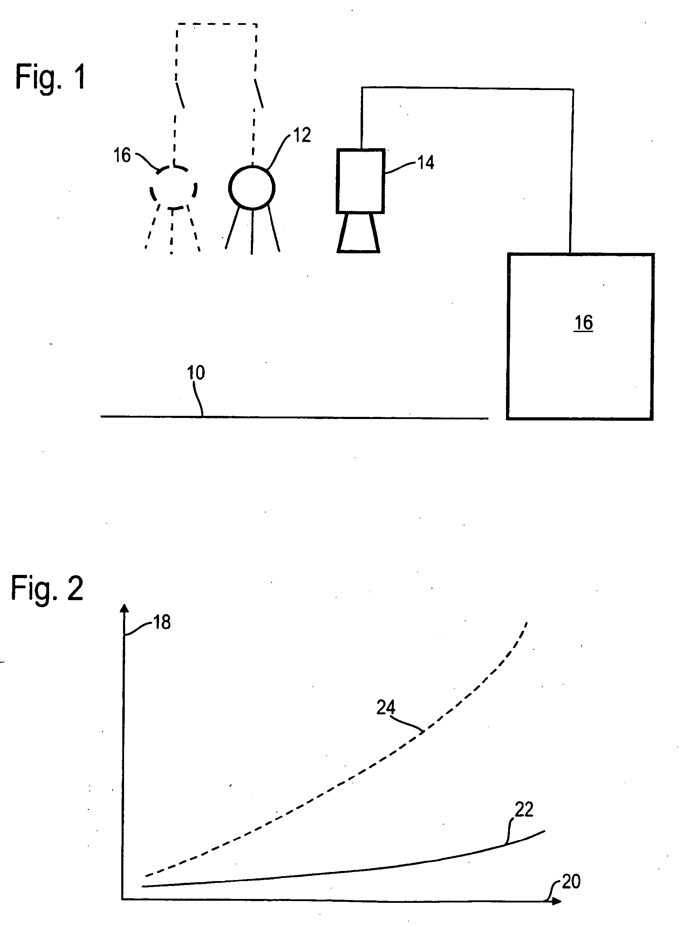

Figur 1 zeigt eine zu überwachende Oberfläche 10, die von einer Belichtungsquelle 12 beleuchtet wird. Eine Kamera 14, bei der es sich in einer Ausführungsform um eine Farbkamera mit den drei spektralen Kanälen ROT,GRÜN,BLAU und im allgemeinen Fall um einen n-kanaligen Spektralsensor mit wenigstens zwei Kanälen handelt. Gestrichelt dargestellt ist einen zweite Belichtungsquelle 16 für eine Ausführungsform, in der es sich bei der Kamera um einen einkanaligen Sensor handelt und spektral unterschiedliche Beleuchtungsquellen 14, 16 abwechselnd angeschaltet werden, um Bildinformationen in verschiedenen Spektralbereichen zu erhalten, weswegen auch Schalter gestrichelt angedeutet sind. Die Signale der Kamera 14 werden in beliebiger, bekannter Art und Weise einer Recheneinheit 16 zugeführt. Die Recheneinheit enthält Softwareprogramme, die es mit Methoden der Bildverarbeitung erlauben, aus den aufgenommenen Bildern eine Spektralstatistik und eine Bildschärfe zu bestimmen, diese mit Referenzwerten zu vergleichen und ein erstes Abweichungsmaß der Spektralstatistik und ein zweiten Abweichungsmaß der Bildschärfe zu berechnen. Ferner wird in der geschilderten Ausführungsform wenigstens eines der beiden Abweichungsmaße mittels einer Transformationsregel, welche die genetisch und/oder kulturell spezifische Wahrnehmung für mehrfarbig gemusterte Oberflächen eines anvisierten Kundenkreises beschreibt, umgerechnet. Die Recheneinheit 16 umfasst im Ausführungsbeispiel ferner einen Klassifikator, der aufgrund der transformierten Werte entscheidet, ob die Qualität der Oberfläche für den anvisierten Kundenkreis ausreicht. Vorzugsweise umfasst die Recheneinheit auch eine Anzeigeeinheit, an der das transformierte Abweichungsmaß oder die transformierten Abweichungsmaße angezeigt werden.

Figur 2 zeigt schematisch einen typischen Verlauf der Wahrnehmung des Farbeindrucks "Rötlichkeit" eines Holzdekors als Funktion der Bildschärfe, d.h. auf der Ordinate 18 ist der subjektive Farbeindruck "Rötlichkeit" aufgetragen, während auf der Abszisse 20 die Bildschärfe aufgetragen ist. Eine durchgehende Linie 22 zeigt den subjektiven Farbeindruck bei einem männlichen Beobachter, während eine gestrichelte Linie 24 den Farbeindruck einer weiblichen Beobachterin wiedergibt. Je schärfer das Druckbild ist, desto rötlicher erscheint also beiden Beobachtern das Dekor. Hierbei ist jedoch diese Empfindung beim weiblichen Beobachter ca. 5 mal stärker ausgeprägt im Vergleich zum männlichen.

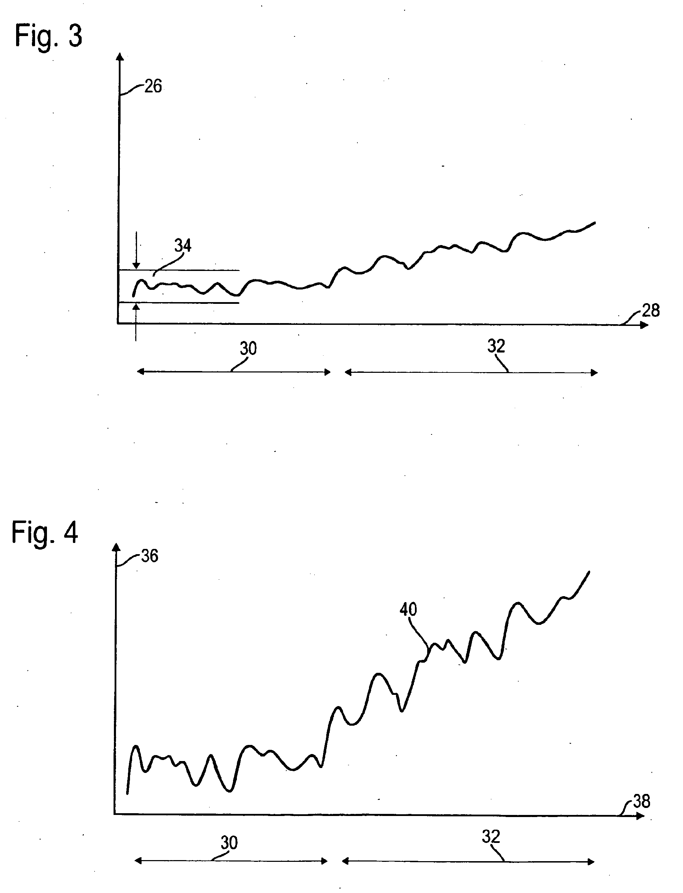

In Figur 3 ist auf der Ordinate 26 die Bildschärfedifferenz eines gedruckten Holzdekors im Vergleich zu einer Referenz aufgetragen, d.h. eines der in der Recheneinheit 16 bestimmten Abweichungsmaße, während es sich bei der Abszisse 28 um eine Zeitachse handelt.

Der dargestellte typische Verlauf der Bildschärfedifferenz über die Produktionszeit zeigt einen im wesentlichen stabilen Verlauf in einem ersten Zeitabschnitt 30 und ein leichtes Wegdriften in einem zweiten Zeitabschnitt 32. Im zweiten Zeitabschnitt 32 nimmt die Bildschärfe zu und im Zusammenhang mit der Figur 2 wird deutlich, dass damit die wahrgenommene "Rötlichkeit" zunimmt, und zwar für einen weiblichen Beobachter wesentlich deutlicher als für einen männlichen. Die Darstellung in Figur 3 entspricht der bisher im Stand der Technik üblichen Darstellungsweise, d.h. die relative Abweichung ist direkt so aufgetragen, wie sie sich aus den relativen Abweichungen ergibt, also ohne eine erfindungsgemäße Transformation. Ein angenommen männlicher Drucker orientiert sich an den zufälligen Produktionsschwankungen, die in einem Bereich 34 liegen, um zwischen einem stabilen Verlauf im ersten Abschnitt 30 und einem leichten Wegdriften im zweiten Abschnitt 32 zu unterscheiden. Er lernt in kurzer Zeit, die Amplitude dieser Ordinate im Sinne der Qualität des produzierten Farbeindruckes zu bewerten auch ohne Vorliegen eines normierten Abweichungsmaßes wie beispielsweise das Maß ΔE der auf Einfarbigkeit begrenzten traditionellen Kolorimetrie.

Für die Zufriedenstellung eines weiblichen Beobachters des produzierten Dekors ist diese herkömmliche relative Anzeige aber irreführend. Während die Darstellung dem männlichen Drucker eine noch harmlose Situation in Abschnitt 32 vorgaukelt, da er noch gar keine oder zumindest nur eine kaum merkliche Rotverschiebung wahrnimmt, wird in Wirklichkeit bereits ein Dekor produziert, welches für Frauen stark störend sichtbare Farbtonverschiebungen (hier einen sog. ROT-Stich) hervorruft. Für Beobachter aus einem anderen Kulturkreis oder anderer Rasse gelten wieder andere Wahrnehmungsschwellen.

Erfindungsgemäß wird daher je nach dem überwiegenden Geschlecht (oder der Rasse, der Kultur) des Kundenkreises, für welchen die laufende Produktion gedacht ist, über eine Transformationsvorschrift die Ordinate automatisch so gespreizt, wie es dem Wahrnehmungsunterschied zwischen einem weiblichen und einem männlichen Beobachter entspricht. Figur 4 zeigt beispielhaft die Anzeige der Bildschärfedifferenz für den Fall einer für einen vorwiegend weiblichen Kundenkreis gedachten Produktion. Auf der Ordinate 36 ist wie in Figur 3 die Bildschärfedifferenz eines gedruckten Holzdekors im Vergleich zu einer Referenz aufgetragen, während auf der Abszisse 38 die Zeit aufgetragen ist. Die Ordinate 36 wird entsprechend der jeweiligen Distanz zwischen der männlichen 22 und der weiblichen Wahrnehmungskennlinie 24 aus Figur 2 gespreizt und damit dem männlichen Drucker unmittelbar die Wichtigkeit dieser Abweichung im Kurvenverlauf 40 verdeutlicht. Wie ein Blick auf Figur 2 zeigt, wird also eine Bildschärfezunahme im oberen Bildschärfebereich wesentlich stärker betont, die Ordinate in diesem Bereich wesentlich stärker "gespreizt", als im unteren Bildschärfebereich. Ein Vergleich der nur schematischen Darstellungen in Figuren 3 und 4 zeigt, dass Kurve 40 in Figur 4 deutlich schneller ansteigt als die Kurve in Figur 3.

Die wahrnehmungsspezifische Transformation der gemessenen Abweichung zwischen der Bildschärfe der Referenz und derjenigen der aktuellen Produktion und die visuelle Darstellung der transformierten Messgröße ist gerade bei relativen und nicht genormten Messgrößen leichter vom Maschinenführer zu interpretieren als eine Veränderung von eingeblendeten Toleranzfelder entsprechend der genetisch/kulturellen Wahrnehmungsdifferenz. Darüber hinaus muss der Maschinenführer nur auswählen, für welchen Kundenkreis produziert wird ohne über dessen Besonderheiten informiert zu sein. Er kann dann die für ihn dargestellte Kurve immer gleich bewerten.

Die hier am Beispiel der Bildschärfe dargestellte Transformation ist analog auf eine Transformation des Abweichungsmaßes für die Spektralverteilung zu übertragen.

Der Erfindungsgedanken ist auch nicht auf die besonders günstige graphische Darstellung dieser Ausführungsform beschränkt, sondern umfasst alle Transformationen der Messgröße, welche dem für die Qualität der Produktion Verantwortlichen anzeigen, ob die produzierten Differenzen bezüglich einer Referenz in der genetisch/kulturell spezifischen Wahrnehmung des belieferten Kundenkreises noch als ausreichende Qualität toleriert werden oder nicht.

Es ist für den Fachmann der Prüftechnik selbstverständlich, dass es gleichbedeutend ist, ob die wahmehmungsspezifische Transformation auf die Abweichungsmaße selbst oder auf die Toleranzen, mit denen die Abweichungen verglichen werden, angewendet werden. Die erste Lösung erlaubt eine leichter zu interpretierende Visualisierung, was bei in der Produktionslinie arbeitenden Systemen einen Vorteil für den überwachenden Menschen darstellt. Der Erfindungsgedanken umfasst beide Verfahrensvarianten.

Ebenso ist der Erfindungsgedanken nicht auf die in dem erklärenden Ausführungsbeispiel dargestellte Transformation der physikalisch messbaren Bildschärfe beschränkt. Wie bereits in der DE-A-103 28 322 dargelegt, ist die Darstellung der Differenz der Farbstatistik (z.B. der Farbhistogramme, der Histogramme des mehrkanaligen Spektralbilder) erfindungsgemäß ebenso nach einer genetisch/kulturellen Wahrnehmungskennlinie zu transformieren, bevor die produzierten Differenzen im Hinblick auf die genetisch/kulturelle Spezifität des Käuferkreises qualitativ bewertet werden.

## Patentansprüche

1. Verfahren zur Überwachung des Farbeindrucks von mehrfarbig gemusterten Oberflächen durch Auswertung von Farbe und Bildschärfe, wobei das Verfahren folgende Schritte umfasst:
Erfassen der zu überwachenden Oberfläche mit einem bildgebenden Sensor in wenigstens zwei unterschiedlichen spektralen Bereichen;
Bestimmen der Bildschärfe des Musters aus Signalen des bildgebenden Sensors in wenigstens einem spektralen Bereich;
Bestimmen der Spektralstatistik aus den Signalen des bildgebenden Sensors;
Vergleichen der gemessenen Bildschärfe mit einer Referenzbildschärfe und Bestimmen eines ersten Abweichungsmaßes;
Vergleichen der gemessenen Spektralstatistik mit einer Referenzspektralstatistik und Bestimmen eines zweiten Abweichungsmaßes;
Festlegen eines ersten Schwellwertes für das maximal zulässige erste Abweichungsmaß und Festlegen eines zweiten Schwellwertes für das maximal zulässige zweite Abweichungsmaß;
Umrechnen wenigstens eines der beiden Abweichungsmaße oder eines aus den beiden Abweichungsmaßen kombinierten Abweichungsmaßes mittels einer Transformationsregel, welche die genetisch und/oder kulturell spezifische Wahrnehmung für mehrfarbig gemusterte Oberflächen eines anvisierten Kundenkreises beschreibt;
Vergleichen des wenigstens einen transformierten Abweichungsmaßes mit dem zugehörigen Schwellwert um zu entscheiden, ob die Oberfläche eine für den anvisierten Kundenkreis ausreichende Qualität besitzt.

2. Verfahren zur Überwachung des Farbeindrucks von mehrfarbig gemusterten Oberflächen durch Auswertung von Farbe und Bildschärfe, wobei das Verfahren folgende Schritte umfasst:
Erfassen der zu überwachenden Oberfläche mit einem bildgebenden Sensor, in wenigstens zwei unterschiedlichen spektralen Bereichen;
Bestimmen der Bildschärfe des Musters aus Signalen des bildgebenden Sensors in wenigstens einem spektralen Bereich;
Bestimmen der Spektralstatistik aus den Signalen des bildgebenden Sensors;
Vergleichen der gemessenen Bildschärfe mit einer Referenzbildschärfe und Bestimmen eines ersten Abweichungsmaßes;
Vergleichen der gemessenen Spektralstatistik mit einer Referenzspektralstatistik und Bestimmen eines zweiten Abweichungsmaßes;
Festlegen eines ersten Schwellwertes für das maximal zulässige erste Abweichungsmaß und Festlegen eines zweiten Schwellwertes für das maximal zulässige zweite Abweichungsmaß;
Umrechnen wenigstens einer der beiden Schwellwerte mittels einer Transformationsregel, welche die genetisch und/oder kulturell spezifische Wahrnehmung für mehrfarbig gemusterte Oberflächen eines anvisierten Kundenkreises beschreibt;
Vergleichen des zugehörigen Abweichungsmaßes mit dem wenigstens einen transformierten Schwellwert um zu entscheiden, ob die Oberfläche eine für den anvisierten Kundenkreis ausreichende Qualität besitzt.

3. Verfahren nach Anspruch 1, ferner umfassend
Auswertung der transformierten Abweichungswerte mit einer Klassifikationsregel, so dass derjenige oder diejenigen genetisch und/oder kulturellen Kundenkreise bestimmt werden, deren Wahrnehmung die produzierte Qualität als ausreichend wahrnimmt.

4. Verfahren nach einem der Ansprüche 1 oder 3, wobei die transformierten Abweichungsmaße zu einem Gesamtabweichungsmaß verrechnet werden und die produzierte Qualität anhand dieses Maßes beurteilt wird.

5. Verfahren nach einem der vorangegangenen Ansprüche, wobei die zu überprüfende Oberfläche in einem Druckverfahren hergestellt wird und während des Druckvorgangs die transformierten Werte kontinuierlich über der Zeit graphisch dargestellt werden und ein Prüfer anhand der Darstellung erkennt, wann er welche Korrektur an der Druckeinrichtung vornehmen muss.

6. Anordnung zur Durchführung des Verfahrens nach einem der vorangegangenen Ansprüche, wobei die Anordnung folgendes umfasst:
einen n-kanaligen Spektralsensor mit n größer/gleich zwei, der angeordnet ist, um eine zu prüfende mehrfarbig gemusterte Oberfläche zu erfassen;
eine Belichtungsquelle, die so angeordnet ist, dass sie die Oberfläche beleuchtet;
eine Recheneinheit, die die Signale des Spektralsensors empfängt und aus den Signalen des Spektralsensors mit Methoden der Bildverarbeitung eine Spektralstatistik und eine Bildschärfe bestimmt, diese mit Referenzwerten vergleicht und ein erstes Abweichungsmaß der Spektralstatistik und ein zweiten Abweichungsmaß der Bildschärfe berechnet und wenigstens eines der beiden Abweichungsmaße oder einen vorgegebenen ersten Schwellwert für das maximal zulässige erste Abweichungsmaß und/oder einen zweiten Schwellwert für das maximal zulässige zweite Abweichungsmaß mittels einer Transformationsregel, welche die genetisch und/oder kulturell spezifische Wahrnehmung für mehrfarbig gemusterte Oberflächen eines anvisierten Kundenkreises beschreibt, umrechnet.

7. Anordnung zur Durchführung des Verfahrens nach einem der vorangegangenen Ansprüche, wobei die Anordnung folgendes umfasst:
einen einkanaligen Spektralsensor, der angeordnet ist, um eine zu prüfende mehrfarbig gemusterte Oberfläche zu erfassen;
wenigstens zwei Belichtungsquellen mit unterschiedlichen spektralen Bereichen, die so angeordnet ist, dass sie die Oberfläche beleuchtet;
Schaltvorrichtung zum seriellen An- und Ausschalten der Belichtungsquellen;
eine Recheneinheit, die die Signale des Spektralsensors empfängt und aus den Signalen des Spektralsensors mit Methoden der Bildverarbeitung eine Spektralstatistik und eine Bildschärfe bestimmt, diese mit Referenzwerten vergleicht und ein erstes Abweichungsmaß der Spektralstatistik und ein zweiten Abweichungsmaß der Bildschärfe berechnet und wenigstens eines der beiden Abweichungsmaße oder einen vorgegebenen ersten Schwellwert für das maximal zulässige erste Abweichungsmaß und/oder einen zweiten Schwellwert für das maximal zulässige zweite Abweichungsmaß mittels einer Transformationsregel, welche die genetisch und/oder kulturell spezifische Wahrnehmung für mehrfarbig gemusterte Oberflächen eines anvisierten Kundenkreises beschreibt, umrechnet.

8. Anordnung nach Anspruch 6 oder 7, die ferner umfasst :
einen Klassifikator, der aufgrund des oder der transformierten Werte nach festen Kriterien entscheidet, ob die Qualität der Oberfläche für einen anvisierten Kundenkreis ausreichend ist.

## Claims

1. A method of monitoring the color impression of multicolor patterned surfaces by an evaluation of the color and the image sharpness, the method comprising the following steps:
capturing the surface to be monitored with an imaging sensor in at least two different spectral ranges;
determining the image sharpness of the pattern from signals of the imaging sensor in at least one spectral range;
determining the spectral statistics from the signals of the imaging sensor;
comparing the measured image sharpness with a reference image sharpness and determining a first deviation rate;
comparing the measured spectral statistics with a reference spectral statistics and determining a second deviation rate;
defining a first threshold value for the maximum permissible first deviation rate and defining a second threshold value for the maximum permissible second deviation rate;
converting at least one of the two deviation rates or a deviation rate combined from the two deviation rates by means of a transformation rule which describes the genetically and/or culturally specific perception for multicolor patterned surfaces of a targeted customer group;
comparing the at least one transformed deviation rate with the associated threshold value to decide whether the surface possesses a quality that is sufficient for the targeted customer group.

2. A method of monitoring the color impression of multicolor patterned surfaces by an evaluation of the color and the image sharpness, the method comprising the following steps:
capturing the surface to be monitored with an imaging sensor in at least two different spectral ranges;
determining the image sharpness of the pattern from signals of the imaging sensor in at least one spectral range;
determining the spectral statistics from the signals of the imaging sensor;
comparing the measured image sharpness with a reference image sharpness and determining a first deviation rate;
comparing the measured spectral statistics with a reference spectral statistics and determining a second deviation rate;
defining a first threshold value for the maximum permissible first deviation rate and defining a second threshold value for the maximum permissible second deviation rate;
converting at least one of the two threshold values by means of a transformation rule which describes the genetically and/or culturally specific perception for multicolor patterned surfaces of a targeted customer group;
comparing the associated deviation rate with the at least one transformed threshold value to decide whether the surface possesses a quality that is sufficient for the targeted customer group.

3. The method according to claim 1, further comprising
evaluating the transformed deviation rates using a classification rule, so that that or those genetically and/or culturally specific group(s) of customers are determined whose perception perceives the quality produced as being sufficient.

4. The method according to either of claims 1 or 3, wherein the transformed deviation rates are calculated to form a total deviation rate and the quality produced is judged on the basis of this rate.

5. The method according to any of the preceding claims, wherein the surface to be inspected is manufactured in a printing method and, during the printing process, the transformed values are continuously graphically represented over time and, based on the representation, an inspector realizes when to perform which correction to the printing device.

6. An arrangement for carrying out the method according to any of the preceding claims, the arrangement comprising:
an n-channel spectral sensor with n equal to or greater than 2, which is arranged to capture a multicolor patterned surface to be inspected;
an illumination source which is arranged to illuminate the surface;
an arithmetic unit which receives the signals of the spectral sensor and, using methods of image processing, determines from the signals of the spectral sensor a spectral statistics and an image sharpness, compares them with reference values, and calculates a first deviation rate of the spectral statistics and a second deviation rate of the image sharpness, and converts at least one of the two deviation rates or a predefined first threshold value for the maximum permissible first deviation rate and/or a second threshold value for the maximum permissible second deviation rate by means of a transformation rule which describes the genetically and/or culturally specific perception for multicolor patterned surfaces of a targeted customer group.

7. An arrangement for carrying out the method according to any of the preceding claims, the arrangement comprising:
a single-channel spectral sensor which is arranged to capture a multicolor patterned surface to be inspected;
at least two illumination sources which have different spectral ranges and are arranged to illuminate the surface;
a switching device for serially switching the illumination sources on and off;
an arithmetic unit which receives the signals of the spectral sensor and, using methods of image processing, determines from the signals of the spectral sensor a spectral statistics and an image sharpness, compares them with reference values, and calculates a first deviation rate of the spectral statistics and a second deviation rate of the image sharpness, and converts at least one of the two deviation rates or a predefined first threshold value for the maximum permissible first deviation rate and/or a second threshold value for the maximum permissible second deviation rate by means of a transformation rule which describes the genetically and/or culturally specific perception for multicolor patterned surfaces of a targeted customer group.

8. The arrangement according to claim 6 or 7, further comprising:
a classifier which, on the basis of the transformed value(s), decides in accordance with fixed criteria whether the quality of the surface is sufficient for a targeted customer group.

## Revendications

1. Procédé de surveillance de l'impression de couleurs de surfaces à motifs multicolores par évaluation de la couleur et de la netteté, le procédé comportant les étapes suivantes :
détection de la surface à surveiller au moyen d'un capteur imageur dans au moins deux régions spectrales différentes ;
détermination de la netteté du motif à partir de signaux du capteur imageur dans au moins une région spectrale ;
détermination de la statistique spectrale à partir des signaux du capteur imageur ;
comparaison de la netteté mesurée avec une netteté de référence, et détermination d'une première mesure de déviation ;
comparaison de la statistique spectrale mesurée avec une statistique spectrale de référence, et détermination d'une deuxième mesure de déviation ;
définition d'une première valeur de seuil pour la première mesure de déviation maximum admissible, et définition d'une deuxième valeur de seuil pour la deuxième mesure de déviation maximum admissible ;
conversion d'au moins une des deux mesures de déviation ou d'une mesure de déviation combinée à partir des deux mesures de déviation au moyen d'une règle de transformation décrivant la perception génétiquement et/ou culturellement spécifique pour des surfaces à motifs multicolores d'une clientèle visée ;
comparaison de ladite au moins une mesure de déviation transformée avec la valeur de seuil associée pour décider si la surface possède une qualité suffisante pour la clientèle visée.

2. Procédé de surveillance de l'impression de couleurs de surfaces à motifs multicolores par évaluation de la couleur et de la netteté, le procédé comportant les étapes suivantes :
détection de la surface à surveiller au moyen d'un capteur imageur dans au moins deux régions spectrales différentes ;
détermination de la netteté du motif à partir de signaux du capteur imageur dans au moins une région spectrale ;
détermination de la statistique spectrale à partir des signaux du capteur imageur ;
comparaison de la netteté mesurée avec une netteté de référence, et détermination d'une première mesure de déviation ;
comparaison de la statistique spectrale mesurée avec une statistique spectrale de référence, et détermination d'une deuxième mesure de déviation ;
définition d'une première valeur de seuil pour la première mesure de déviation maximum admissible, et définition d'une deuxième valeur de seuil pour la deuxième mesure de déviation maximum admissible ;
conversion d'au moins une des deux valeurs de seuil au moyen d'une règle de transformation décrivant la perception génétiquement et/ou culturellement spécifique pour des surfaces à motifs multicolores d'une clientèle visée ;
comparaison de la mesure de déviation associée avec ladite au moins une valeur de seuil transformée pour décider si la surface possède une qualité suffisante pour la clientèle visée.

3. Procédé selon la revendication 1, comprenant en outre
l'évaluation des valeurs de déviation transformées au moyen d'une règle de classification de manière à déterminer la ou les clientèle(s) génétiquement et/ou culturellement spécifique(s) dont la perception perçoit la qualité produite comme suffisante.

4. Procédé selon l'une des revendications 1 ou 3, les mesures de déviation transformées étant calculées de manière à obtenir une mesure de déviation totale, la qualité produite étant jugée à partir de cette mesure.

5. Procédé selon l'une des revendications précédentes, la surface à examiner étant produite dans un procédé d'impression, et les valeurs transformées étant continuellement représentées graphiquement dans le temps durant l'opération d'impression, et un examinateur reconnaissant à l'aide de la représentation à quel moment il doit effectuer quelle correction sur le dispositif d'impression.

6. Agencement pour la mise en oeuvre du procédé selon l'une des revendications précédentes, l'agencement présentant :
un capteur spectral à n canaux, n étant supérieur/égal deux, le capteur étant agencé de manière à détecter une surface à motifs multicolores à examiner ;
une source d'éclairage agencée de manière à éclairer la surface ;
une unité arithmétique qui reçoit les signaux du capteur spectral et détermine, à base des signaux du capteur spectral, une statistique spectrale et une netteté au moyen de méthodes du traitement d'images, qui les compare avec des valeurs de référence et calcule une première mesure de déviation de la statistique spectrale ainsi qu'une deuxième mesure de déviation de la netteté, et qui transforme au moins l'une des deux mesures de déviation ou une première valeur de seuil prédéterminée pour la première mesure de déviation maximum admissible et/ou une deuxième valeur de seuil pour la deuxième mesure de déviation maximum admissible au moyen d'une règle de transformation qui décrit la perception génétiquement et/ou culturellement spécifique pour des surfaces à motifs multicolores d'une clientèle visée.

7. Agencement pour la mise en oeuvre du procédé selon l'une des revendications précédentes, l'agencement présentant :
un capteur spectral à un canal qui est agencé de manière à détecter une surface à motifs multicolores à examiner ;
au moins deux sources d'éclairage possédant des régions spectrales différentes, qui sont agencées de manière à éclairer la surface ;
un dispositif de commutation pour la mise en marche et l'arrêt sériels des sources d'éclairage ;
une unité arithmétique qui reçoit les signaux du capteur spectral et détermine, à base des signaux du capteur spectral, une statistique spectrale et une netteté au moyen de méthodes du traitement d'images, qui les compare avec des valeurs de référence et calcule une première mesure de déviation de la statistique spectrale ainsi qu'une deuxième mesure de déviation de la netteté, et qui transforme au moins l'une des deux mesures de déviation ou une première valeur de seuil prédéterminée pour la première mesure de déviation maximum admissible et/ou une deuxième valeur de seuil pour la deuxième mesure de déviation maximum admissible au moyen d'une règle de transformation qui décrit la perception génétiquement et/ou culturellement spécifique pour des surfaces à motifs multicolores d'une clientèle visée.

8. Agencement selon la revendication 6 ou 7, présentant en outre :
un classificateur qui décide à base de la ou des valeur(s) transformée(s) et selon des critères fixes si la qualité de la surface est suffisante pour une clientèle visée.
